# EUROPÄISCHE PATENTANMELDUNG

(11) **EP 0 959 286 A2**
(43) Veröffentlichungstag der Anmeldung: **24.11.1999**
(21) Anmeldenummer: 99109472.3
(22) Anmeldetag: 12.05.1999
(51) Int. Cl.: F16L 17/04

(54) **Rohrkupplung**

(30) Priorität: 20.05.1998 DE 19822645; 25.02.1999 DE 19908119
(71) Anmelder: Rasmussen GmbH, D-63477 Maintal (DE)
(72) Erfinder: Schmidt, Frank, 63526 Erlensee (DE)
(74) Vertreter: Knoblauch, Andreas, Dr.-Ing.

(57) **Zusammenfassung**

Eine Rohrkupplung zum Verbinden von Rohren (1) mit unprofilierten (2) Endabschnitten besteht aus einer elastomeren Dichtmuffe (3) zur dichten Aufnahme der Rohrendabschnitte und einer die Dichtmuffe (3) umgebenden Spannschelle (4) mit einem Schellenband (5), an dessen Enden Spannbacken (6) ausgebildet sind, die durch Spannmittel (8) zusammenziehbar sind. Das Schellenband (5) hat an seinen Stirnseiten nach innen ragende Flansche (9), und zwischen der Dichtmuffe (3) und den Flanschen (9) sind sich an der Innenseite des Schellenbandes (5) abstützende Klemmringe (13) in C-Form angeordnet, die beim Spannen des Schellenbandes (5) mittels Vorsprüngen an ihrer radial inneren Fläche (14) in das Rohrmaterial eingreifen. Um die Ausbildung der Klemmringe (13) zu vereinfachen, bestehen sie im wesentlichen aus Kunststoff, wobei sie die Zwischenräume zwischen der Dichtmuffe (3) und den Flanschen (9) weitgehend ausfüllen. Sie können einteilig oder aus zwei Ringteilen (13a, 13b) ausgebildet sein, von denen der radial innere (13b) aus einer Messinglegierung bestehen kann. Die Vorsprünge können als umlaufende Rippen (20) ausgebildet sein.

## Beschreibung

Die Erfindung bezieht sich auf eine Rohrkupplung zum Verbinden von Rohren mit unprofilierten Endabschnitten, mit einer elastomeren Dichtmuffe zur dichten Aufnahme der Rohrendabschnitte, mit einer die Dichtmuffe umgebenden Spannschelle mit einem Schellenband, an dessen Enden Spannbacken ausgebildet sind, die durch Spannmittel zusammenziehbar sind, und das an seinen Stirnseiten nach innen ragende Flansche aufweist, mit zwischen der Dichtmuffe und den Flanschen angeordneten, sich an der Innenseite des Schellenbandes abstützenden Klemmringen in C-Form, die beim Spannen des Schellenbandes mittels Vorsprüngen an ihrer radial inneren Fläche in das Rohrmaterial eingreifen.

Bei einer bekannten Rohrkupplung dieser Art (EP 0 205 896 A2) besteht jeder Klemmring aus einem dünnwandigen kegelstumpfförmigen Federring und einem Haltering. Der Federring liegt mit seinem Innenumfang an einer an der äußeren Mantelfläche des Halteringes ausgebildeten Schulter an, während sein Außenumfang in der durch die Abbiegung der Flansche gebildeten Biegungskehle anliegt. Der Federring und der Haltering bestehen jeweils aus Metall. Der Haltering ist ferner auf seiner radial inneren Fläche mit raspelartigen Zähnen versehen, die aus dem Material des Halterings herausgestoßen sind. Die Herstellung des Klemmrings ist aufwendig.

Der Erfindung liegt die Aufgabe zugrunde, eine Rohrkupplung der eingangs genannten Art anzugeben, bei der die Herstellung der Klemmringe einfacher ist, ohne deren Festigkeit zu beeinträchtigen.

Erfindungsgemäß besteht eine erste Lösung darin, daß die Klemmringe zumindest teilweise aus Kunststoff sowie aus einem ersten Ringteil und einem am radial inneren Umfang des ersten Ringteils befestigten zweiten Ringteil bestehen und im Querschnitt etwa dreieckförmig sind, so daß sie die Zwischenräume zwischen der Dichtmuffe und den Flanschen weitgehend ausfüllen.

Eine zweite Lösung besteht erfindungsgemäß darin, daß die Klemmringe im wesentlichen aus Kunststoff bestehen und im Querschnitt etwa dreieckförmig sind, so daß sie die Zwischenräume zwischen der Dichtmuffe und den Flanschen weitgehend ausfüllen, und daß die Vorsprünge sich über den inneren Umfang des Klemmrings erstreckende, sich radial nach innen verjüngende Rippen sind.

Bei beiden Lösungen können die Klemmringe auf einfache Weise und kostengünstig hergestellt werden. Da sie bei herkömmlichen Rohrkupplungen die im Querschnitt zumeist dreieckförmigen Ringräume zwischen der Dichtmuffe und dem benachbarten Flansch ohne zusätzliche Stützteile im wesentlichen vollständig ausfüllen, haben sie einen entsprechend großen Querschnitt mit entsprechend hoher Festigkeit, um zum einen die Rohre axial gegen hohe Innendrücke abzustützen und zum anderen hohen Radialkräften beim Spannen der Schelle standzuhalten. Bei der zweiten Lösung halten die Rippen darüber hinaus hohen Axialkräften stand, auch wenn sie - ebenso wie der zweite Ringteil bei der ersten Lösung - im wesentlichen aus Kunststoff bestehen.

Die Vorsprünge können bei der ersten Lösung durch eine vorbestimmte, gleichmäßige Rauhigkeit der radial inneren Fläche der Klemmringe gebildet sein. Dabei kann die rauhe innere Fläche der Klemmringe weitgehend großflächig am Umfang der Endabschnitte der Rohre anliegen, wobei die winzigen Vorsprünge der rauhen Fläche allenfalls sehr feine Riefen im Rohrmaterial ausbilden, wenn sich die Rohre und die Klemmringe relativ zueinander aufgrund hoher Innendrücke der Rohre verschieben. Dementsprechend ist die Gefahr einer Verminderung der Festigkeit der Rohre, insbesondere solcher aus Kunststoff, sehr gering.

Ferner ist es bei der erstem Lösung möglich, daß der zweite Ringteil ein die Rauhigkeit aufweisender Reibbelag ist. Dieser kann vormontiert sein, z.B. form- oder stoffschlüssig. Bei der Montage der Kupplung brauchen dann lediglich die Klemmringe montiert zu werden.

Günstig ist es, wenn der zweite Ringteil in einer Nut im radial inneren Umfang des ersten Ringteils befestigt ist und die Tiefe der Nut kleiner als die radiale Dicke des zweiten Ringteils ist. Die Nut trägt dann gleichzeitig zur Axialsicherung des zweiten Ringteils bei, wobei die Befestigung auf einfache Weise durch Kleben erfolgen kann.

Die Rauhigkeit kann aber auch auf einfache Weise durch Schmirgel bewirkt sein.

Wenn der Schmirgel unmittelbar in den inneren Flächen der Klemmringe eingebettet ist, brauchen ebenfalls nur die Klemmringe montiert zu werden.

Alternativ können die Vorsprünge neben Einschnitten in Reibbelägen aus Metall von außen nach innen schuppenartig herausgedrückt sein.

Sodann kann bei der ersten Lösung vorgesehen sein, daß der erste Ringteil im wesentlichen aus Kunststoff und der zweite Ringteil aus Metall besteht und daß die Vorsprünge sich über den inneren Umfang des zweiten Ringteils erstreckende, sich radial nach innen verjüngende Rippen sind. Die Rippen bestehen hierbei ebenfalls aus Metall und haben daher eine entsprechend hohe Festigkeit, so daß die Rohrverbindung entsprechend höheren Axialbelastungen standhält als bei Kunststoffrippen.

Ferner kann hierbei der erste Ringteil in einer Nut im radial äußeren Umfang des zweiten Ringteils befestigt und die Tiefe der Nut kleiner als die radiale Dicke des ersten Ringteils sein. Da hierbei die Wände der Nut ebenso wie der radial innere zweite Ringteil aus Metall bestehen, ist die Gefahr eines Bruchs dieser Wände geringer als bei Ausbildung des zweiten Ringteils aus im wesentlichen Kunststoff.

Der Kunststoff kann aus einem durch Glasfasern verstärkten Polyamid bestehen. Er hat dann eine sehr hohe Festigkeit.

Vorzugsweise handelt es sich bei dem Polyamid um PA 66.

Das Metall kann im wesentlichen aus Messing bestehen. Dieses Material ist leicht formbar und hat dennoch eine verhältnismäßig hohe Festigkeit.

Eine noch höhere Festigkeit des Metalls ergibt sich, wenn es zusätzlich Mangan aufweist.

Die Erfindung und ihre Weiterbildungen werden nachstehend anhand der Zeichnung bevorzugter Ausführungsbeispiele näher beschrieben. Hierin zeigen:
- Fig. 1: eine Axialansicht eines ersten Ausführungsbeispiel einer erfindungsgemäßen Rohrkupplung,
- Fig. 2: eine Radialansicht der Rohrkupplung nach Fig. 1, teilweise im Schnitt,
- Fig. 3: einen Axialschnitt der Rohrkupplung nach Fig. 1 mit den darin eingeführten Rohrenden,
- Fig. 4: den im einkreisten Bereich liegenden Ausschnitt der Fig. 3 in vergrößertem Maßstab,
- Fig. 5: eine Axialansicht eines Klemmring der Rohrkupplung nach Fig. 1,
- Fig. 6: einen Axialschnitt des Klemmrings nach Fig. 5,
- Fig. 7: eine Axialansicht eines zweiten Ausführungsbeispiels einer erfindungsgemäßen Rohrkupplung,
- Fig. 8: eine Radialansicht der Rohrkupplung nach Fig. 7, teilweise im Schnitt,
- Fig. 9: einen Axialschnitt der Rohrkupplung nach Fig. 7 mit den darin eingeführten Rohrenden,
- Fig. 10: den im eingekreisten Bereich liegenden Ausschnitt der Fig. 9 in vergrößertem Maßstab,
- Fig. 11: eine Axialansicht des Klemmrings des zweiten Ausführungsbeispiels,
- Fig. 12: einen Axialschnitt des Klemmrings nach Fig. 11,
- Fig. 13: den im eingekreisten Bereich liegenden Ausschnitt der Fig. 12 in vergrößertem Maßstab,
- Fig. 14: eine Axialansicht eines abgewandelten Klemmrings der Rohrkupplung nach den Fig. 7 bis 10,
- Fig. 15: einen Axialschnitt des Klemmrings nach Fig. 14 und
- Fig. 16: den im eingekreisten Bereich liegenden Ausschnitt der Fig. 15 in vergrößertem Maßstab.

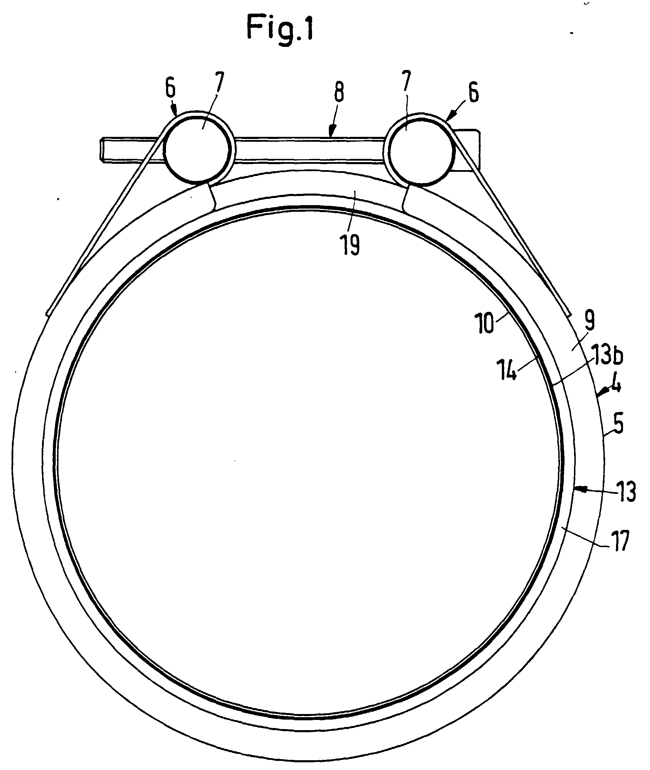

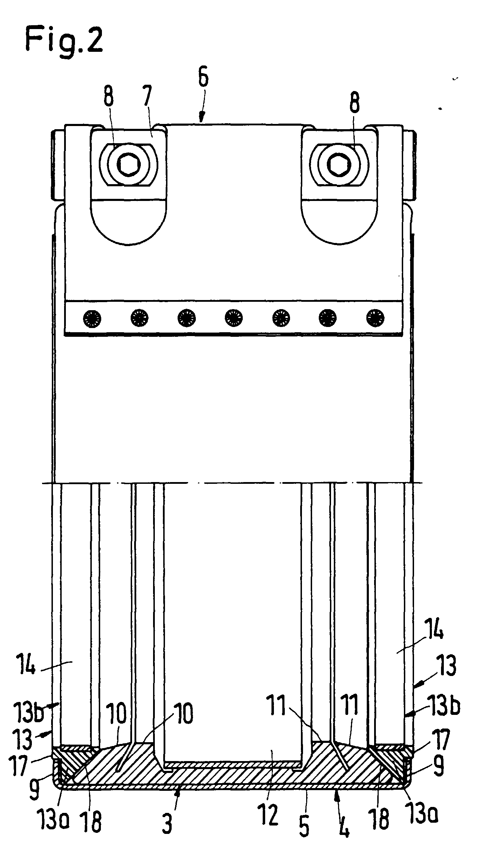

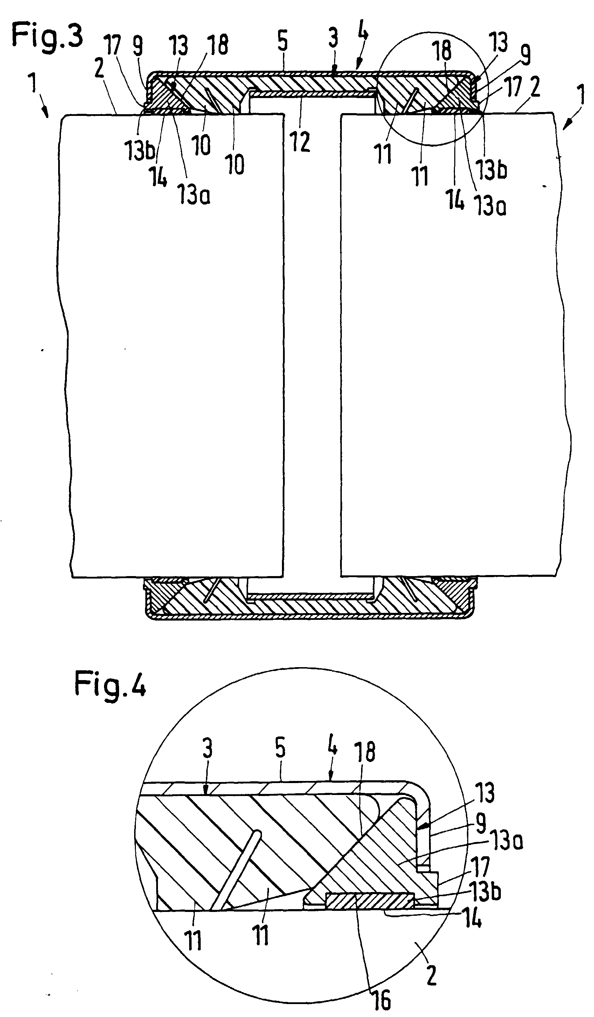

Die Rohrkupplung nach den Fig. 1 bis 5 dient zum Verbinden von Rohren 1 mit weitgehend glatten, unprofilierten Endabschnitten 2, insbesondere Rohren, hauptsächlich Abwasserrohren, aus Kunststoff. Die Rohrkupplung enthält eine elastomere Dichtmuffe 3 zur dichten Aufnahme der Rohrendabschnitte 2 und eine die Dichtmuffe 3 umgebende Spannschelle 4 mit einem Schellenband 5, an dessen Enden Spannbacken 6 in Form von umgebogenen Endabschnitten des Schellenbandes 5 und diese axial durchsetzenden Bolzen 7 ausgebildet sind. Die Spannbacken sind durch Spannmittel 8 in Form von Spannschrauben, die radial durchgehende Bohrungen des einen Bolzens 7 und radiale Gewindebohrungen des anderen Bolzens 7 durchsetzen, in Umfangsrichtung zusammenziehbar. Das Schellenband 5 hat ferner an seinen Stirnseiten nach innen ragende Flansche 9.

Die Dichtmuffe 3 ist auf ihrer Innenseite nahe ihren axialen Enden mit zu den Rohrenden hin gerichteten Dichtlippen 10, 11 und zwischen den Dichtlippen 10, 11 mit einem C-förmigen Metallband 12 zur radialen Abstützung der Dichtmuffe im Bereich der Fuge zwischen den einander zugekehrten Stirnseiten der Endabschnitte 2 der Rohre 1 versehen.

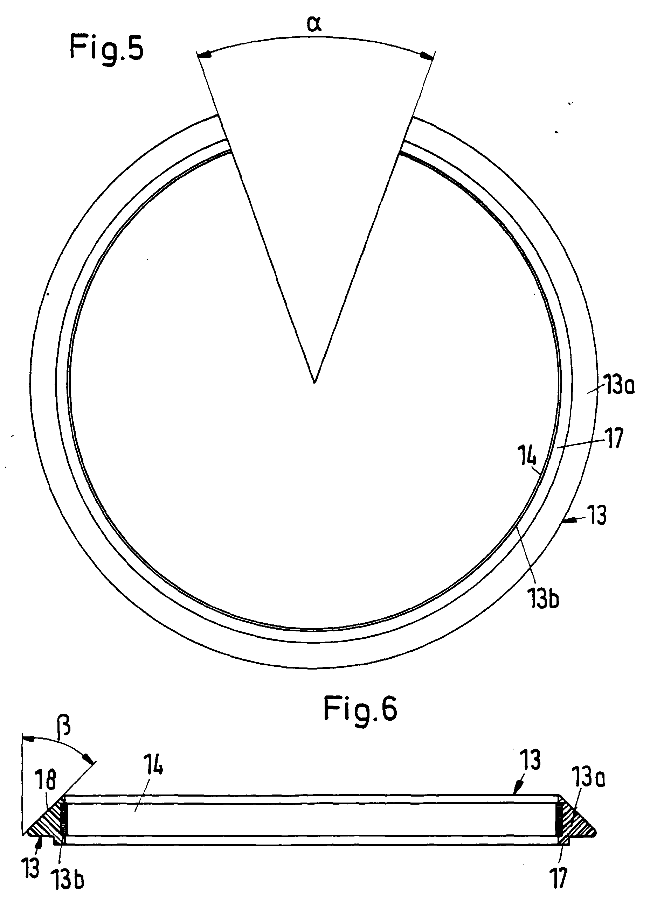

Zwischen der Dichtmuffe 3 und den Flanschen 9 ist auf jeder Seite der Dichtmuffe 3 ein sich an der Innenseite des Schellenbandes 4 und den Flanschen abstützender Klemmring 13 in C-Form, siehe insbesondere Fig. 5 und 6, im wesentlichen aus Kunststoff angeordnet. Die Klemmringe 13 bestehen aus einem radial äußeren Ringteil 13a und einem radial inneren Ringteil 13b und greifen beim Spannen des Schellenbandes 4 mittels winziger, in den Zeichnungen nicht dargestellter Vorsprünge an ihrer radial inneren Fläche 14 in das Rohrmaterial ein. Die Vorsprünge sind durch eine vorbestimmte, gleichmäßige Rauhigkeit der radial inneren Fläche 14 der Klemmringe 13 gebildet, vorzugsweise durch Schmirgel.

Im dargestellten Ausführungsbeispiel werden die winzigen Vorsprünge durch die Rauhigkeit eines den am radial inneren Umfang des Ringteils 13a befestigten Ringteil 13b bildenden Reibbelags gebildet.

Die als Reibbelag ausgebildeten Ringteile 13b sind jeweils in einer Nut 16 im radial inneren Umfang der Ringteile 13a befestigt. Die Tiefe der Nuten 16 ist kleiner als die Dicke der Ringteile 13b.

Die Klemmringe 13 sind im Querschnitt etwa dreieckförmig, so daß sie die im Querschnitt ebenfalls etwa dreiecktörmigen Ringräume zwischen der Dichtmuffe 3 und den Flanschen 9 weitgehend ausfüllen. Ein axialer Wulst 17 jedes Klemmrings 13 greift in einen Spalt zwischen jeweils einem der Flansche 9 und dem Rohrumfang.

Nach Fig. 5 haben die Enden jedes Klemmrings 13 einen Winkelabstand α von etwa 20 bis 45°, insbesondere 30 bis 40°, vorzugsweise 35°.

Nach Fig. 6 beträgt der Winkel β, den die an der Dichtmuffe 3 anliegende Fläche 18 jedes Klemmrings 13 mit seiner Achse einschließt, etwa 35 bis 60°, vorzugsweise etwa 45°.

Der Spalt zwischen den Enden des Schellenbands 5 ist nach Fig. 1 durch eine Brücke 19 überbrückt.

Die rauhe Fläche 14 jedes Klemmrings 13 bzw. seines als Reibbelag ausgebildeten Ringteils 13b liegt weitgehend großflächig auf dem betreffenden Rohrendabschnitt 2 auf und verhindert, da sie nur winzige Vorsprünge aufweist, die Ausbildung tieferer Riefen in der Oberfläche des betreffenden Rohres 1, wenn die Rohre 1 aufgrund sehr hoher Innendrücke axial auseinanderbewegt werden sollten. Dies ist insbesondere bei Kunststoffrohren von Vorteil, aber auch bei Keramik-, Glas- oder Metallrohren, um eine Verringerung ihrer Festigkeit zu verhindern. Ferner können eventuell durch tiefe Riefen gebildete, scharfkantige Grate nicht zu einer Beschädigung der Dichtflächen, d.h. der Dichtlippen 10, 11 der elastomeren Dichtmuffe 3, führen, wenn die Rohre 1 entkuppelt und danach erneut axial in dieselbe Rohrkupplung eingeführt werden.

Die Ringteile 13b können in jeweils einer Nut 16 der Ringteile 13a eingeklebt sein. Sie können aber auch nur formschlüssig in den Nuten 16 gehalten sein. Hierbei können sie durch eine radial nach außen wirkende Eigenelastitzität zusätzlich festgehalten sein. Es ist aber auch möglich, die Reibflächen 14 unmittelbar in der inneren Umfangsfläche der Klemmringe 13 auszubilden, z.B. durch Einbettung von Schmirgel in diesen Umfangsflächen, wenn die Klemmringe 13 im übrigen aus Kunststoff bestehen. Auch die Fläche 14 der als Reibbeläge ausgebildeten Ringteile 13b kann durch Schmirgel gebildet sein, wobei auch die Reibbeläge ansonsten aus Kunststoff bestehen können.

Alternativ können die als Reibbeläge ausgebildeten Ringteile 13b auch aus Metall bestehen und ihre feinen Vorsprünge neben radial durchgehenden Einschnitten in den Reibbelägen von außen nach innen schuppenartig herausgedrückt sein.

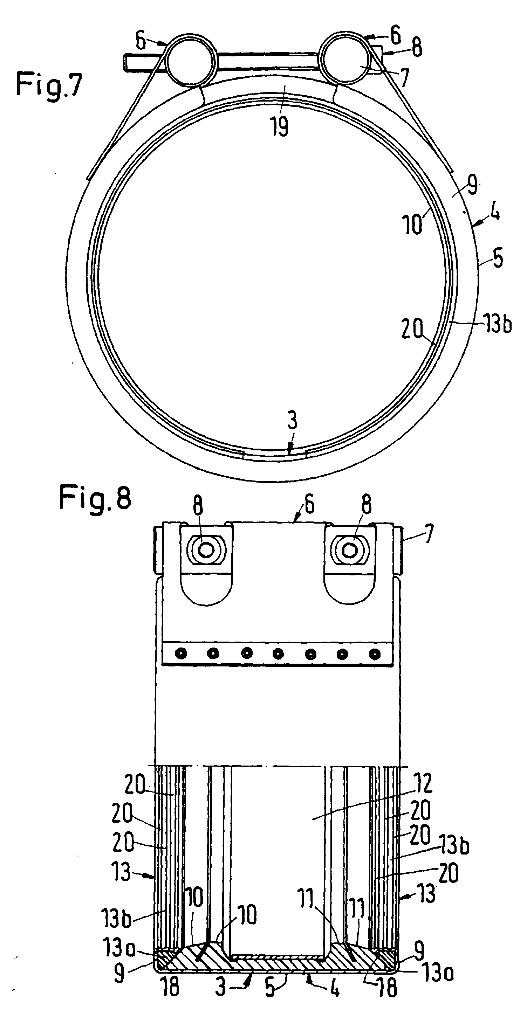

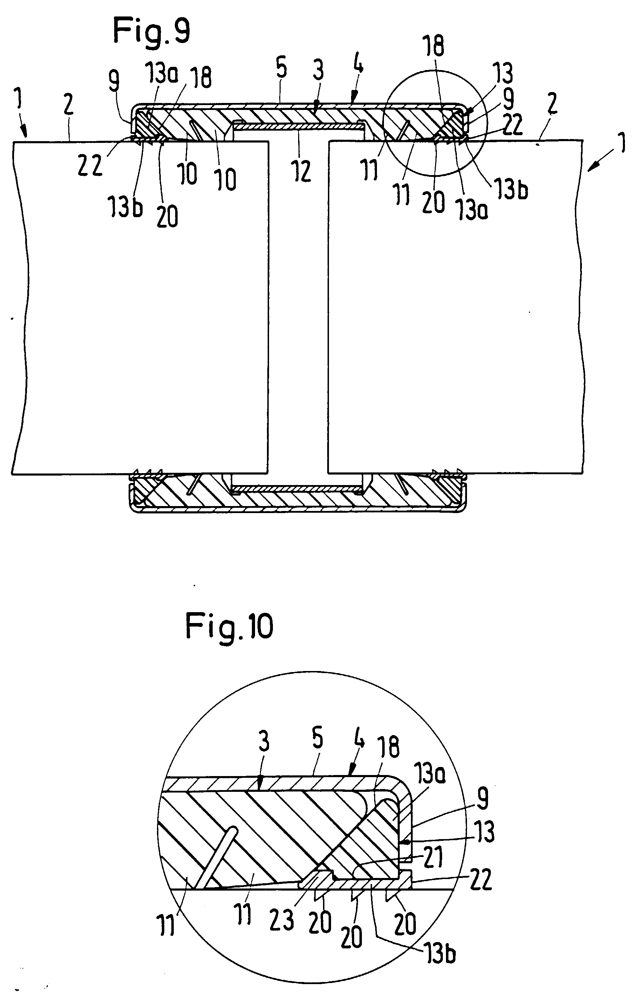

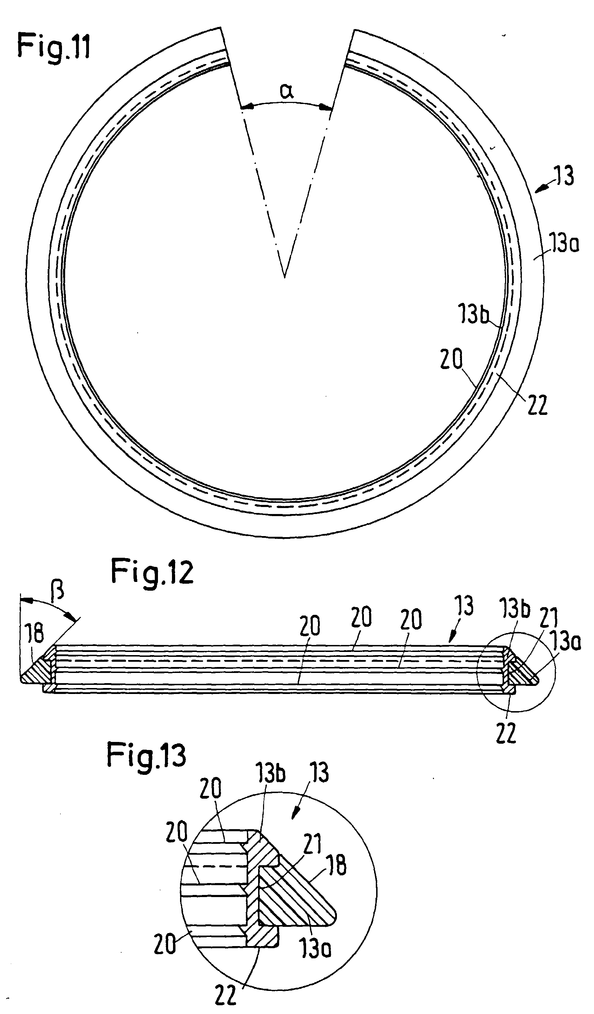

Das zweite Ausführungsbeispiel nach den Fig. 7 bis 13 unterscheidet sich von dem ersten Ausführungsbeispiel nur in der Ausbildung der Klemmringe 13. Diese bestehen aus einem radial äußeren Ringteil 13a und einem radial inneren Ringteil 13b. Der Ringteil 13a besteht im wesentlichen aus Kunststoff und der Ringteil 13b aus Metall. Über den inneren Umfang des Ringteils 13b erstrecken sich mehrere parallele Rippen 20, im dargestellten Ausführungsbeispiel drei Rippen 20. Die Rippen 20 verjüngen sich radial nach innen, wobei ihr Querschnitt etwa die Form eines rechtwinkligen Dreiecks hat, wobei die die eine Kathete bildende Seite jeder Rippe 20 der axialen Mitte der Rohrkupplung zugekehrt und die die Hypotenuse bildende Seite der axialen Mitte abgekehrt ist. Jeder Ringteil 13b hat auf seiner radial äußeren Seite eine umlaufende Nut 21, in der der radial äußere Ringteil 13a befestigt ist, vorzugsweise durch Kleben. Die axial äußere Wand 22 jedes Ringteils 13b liegt in einem Spalt zwischen jeweils einem der Flansche 9 und dem Rohrumfang. Die axial innere Wand 23 (Fig. 10) greift in eine Hinterschneidung des äußeren Ringteils 13a ein, und ihre axial innere Fläche ist mit der an der Dichtmuffe 3 anliegenden Fläche 18 bündig und unter dem Winkel β (Fig. 12) geneigt. Die Winkel α und β (Fig. 11 und 12) sind die gleichen wie bei dem ersten Ausführungsbeispiel.

Der radial äußere Ringteil 13a besteht im wesentlichen aus Kunststoff, vorzugsweise aus glasfaserverstärktem Polyamid, insbesondere PA 66, in dem sogenannte Kurz-Glasfasern eingebettet sind, die im fertig gespritzten Ringteil 13a eine Länge von 0,1 bis 0,8 mm haben. Der Anteil der Glasfasern beträgt etwa 25 bis 30 Volumenprozent des Ringteils 13a.

Der radial innere Ringteil 13b jedes Klemmrings 13 besteht im wesentlichen aus Messing mit einem geringen Zusatz an Mangan. Vorzugsweise enthält der Ringteil 30a etwa 57 bis 59 % Cu; 1,5 bis 3,0 % Mn, wobei die Legierung weitere Zusätze enthalten kann, vorzugsweise 1,3 bis 2,3 % Al, 0,2 bis 0,8 % Pb und 0,3 bis 1,3 % Si.

Der Rest besteht aus Zink (Zn). Es können aber auch Verunreinigungen von maximal 0,4 % Sn, 1,0 % Fe, 1,0 % Ni und weitere Verunreinigungen von höchstens 0,3 % enthalten sein. Bei den Prozentangaben handelt es sich um Gewichtsprozent.

Diese Legierung ist verhältnismäßig hart und laßt sich dennoch leicht im Strangpreßverfahren formen und in die Ringform biegen. Darüber hinaus hat sie eine gewisse Elastizität. Ferner lassen sich die Rippen 20 leicht in den noch geraden Strang rollen.

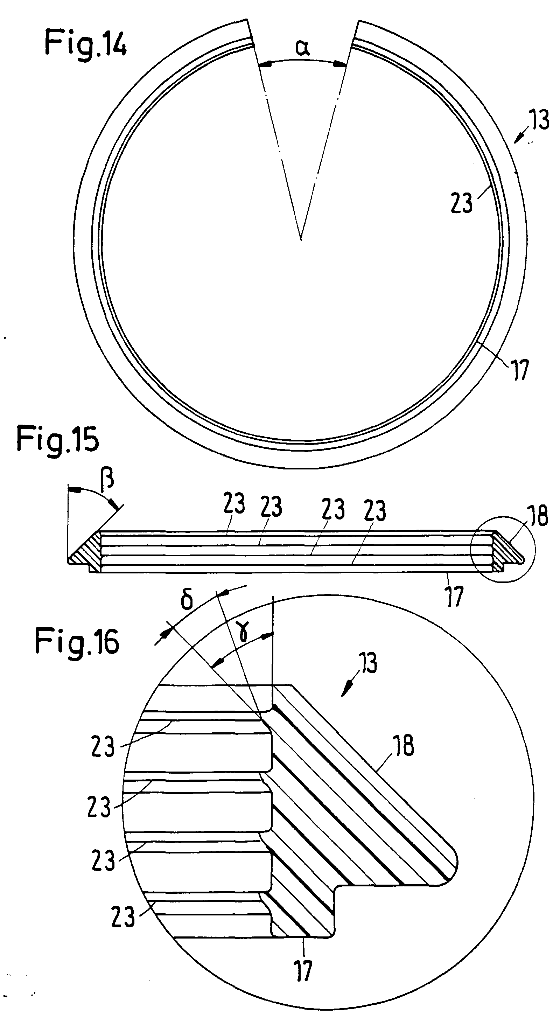

Der Klemmring 13 nach den Fig. 14 bis 16 ist einteilig im wesentlichen aus Kunststoff hergestellt. Er hat ebenfalls mehrere, sich über seinen inneren Umfang erstreckende, sich radial nach innen verjüngende Rippen 23. Der Querschnitt der Rippen 23 hat ebenso wie der Querschnitt der Rippen 20 im wesentlichen die Form eines rechtwinkligen Dreiecks, dessen Hypotenuse der axialen Mitte der Rohrkupplung abgekehrt ist. Während der Hypotenusenabschitt wie bei den Rippen 20 mit der Axialrichtung einen Winkel γ von etwas weniger als 45°, hier etwa 41°, einschließt, ist die radial innere Kante der Rippen 23 gegenüber dem Hypotenusenabschnitt um einen Winkel δ von etwa 20 bis 25° abgeflacht. Aufgrund dieser Abflachung sind die Rippen 23 axial höher belastbar.

Die Winkel α und β (Fig. 14 und 15) sind wieder die gleichen wie bei dem ersten Ausführungsbeispiel.

Das Material dieser Halteringe 13 ist ebenfalls ein glasfaserverstärktes Polyamid, vorzugsweise PA 66, mit einem Lang-Glasfaseranteil von etwa 50 bis 80 Volumenprozent, vorzugsweise etwa 60 Volumensprozent. Die Lang-Glasfasern haben im Rohzustand eine Länge von etwa 5 bis 10 mm und im in das Polyamid eingebetteten Zustand nur noch eine Länge von etwa 1 bis 8 mm, weil sie beim Spritzen der Kunststoff-Klemmringe zumindest zum größten Teil zerbrechen. Bei der Abwandlung der Klemmringe 13 nach den Fig. 14 bis 16 haben die Klemmringe 13 aufgrund des höheren Glasfaseranteils eine noch höhere Festigkeit als die Ringteile 13a bei den vorhergehenden Ausführungsbeispielen, wobei sie sich aufgrund ihrer einteiligen Ausbildung gegenüber der zweiteiligen Ausbildung noch einfacher herstellen lassen.

Sowohl bei einteiliger Ausbildung jedes Klemmrings 13 als auch bei Ausbildung jedes Klemmrings 13 mit einem daran befestigten inneren Reibbelag oder Ringteil 13a entfällt die separate Montage zweier getrennter Teile des Klemmrings in der Spannschelle.

## Patentansprüche

1. Rohrkupplung zum Verbinden von Rohren (1) mit unprofilierten Endabschnitten (2), mit einer elastomeren Dichtmuffe (3) zur dichten Aufnahme der Rohrendabschnitte (2), mit einer die Dichtmuffe (3) umgebenden Spannschelle (4) mit einem Schellenband (5), an dessen Enden Spannbacken (6) ausgebildet sind, die durch Spannmittel (8) zusammenziehbar sind, und das an seinen Stirnseiten nach innen ragende Flansche (9) aufweist, mit zwischen der Dichtmuffe (3) und den Flanschen (9) angeordneten, sich an der Innenseite des Schellenbandes (5) abstützenden Klemmringen (13) in C-Form, die beim Spannen des Schellenbandes (5) mittels Vorsprüngen aus hartem Material an ihrer radial inneren Fläche (14) in das Rohrmaterial eingreifen, dadurch gekennzeichnet, daß die Klemmringe (13) zumindest teilweise aus Kunststoff sowie aus einem ersten Ringteil (13a) und einem am radial inneren Umfang des ersten Ringteils (13a) befestigten zweiten Ringteil (13b) bestehen und im Querschnitt etwa dreieckförmig sind, so daß sie die Zwischenräume zwischen der Dichtmuffe (3) und den Flanschen (9) weitgehend ausfüllen.

2. Rohrkupplung zum Verbinden von Rohren (1) mit unprofilierten Endabschnitten (2), mit einer elastomeren Dichtmuffe (3) zur dichten Aufnahme der Rohrendabschnitte (2), mit einer die Dichtmuffe (3). umgebenden Spannschelle (4) mit einem Schellenband (5), an dessen Enden Spannbacken (6) ausgebildet sind, die durch Spannmittel (8) zusammenziehbar sind, und das an seinen Stirnseiten nach innen ragende Flansche (9) aufweist, mit zwischen der Dichtmuffe (3) und den Flanschen (9) angeordneten, sich an der Innenseite des Schellenbandes (5) abstützenden Klemmringen (13) in C-Form, die beim Spannen des Schellenbandes (5) mittels Vorsprüngen aus hartem Material an ihrer radial inneren Fläche (14) in das Rohrmaterial eingreifen, dadurch gekennzeichnet, daß die Klemmringe (13) im wesentlichen aus Kunststoff bestehen und im Querschnitt etwa dreieckförmig sind, so daß sie die Zwischenräume zwischen der Dichtmuffe (3) und den Flanschen (9) weitgehend ausfüllen, und daß die Vorsprünge sich über den inneren Umfang des Klemmrings (13) erstreckende, sich radial nach innen verjüngende Rippen (20) sind.

3. Rohrkupplung nach Anspruch 1, dadurch gekennzeichnet, daß die Vorsprünge durch eine vorbestimmte, gleichmäßige Rauhigkeit der radial inneren Fläche (14) der Klemmringe (13) gebildet sind.

4. Rohrkupplung nach Anspruch 3, dadurch gekennzeichnet, daß der zweite Ringteil ein die Rauhigkeit aufweisender Reibbelag (15) ist.

5. Rohrkupplung nach Anspruch 4, dadurch gekennzeichnet, daß der zweite Ringteil (13b) in einer Nut (16) im radial inneren Umfang des ersten Ringsteils (13a) befestigt ist und die Tiefe der Nut (16) kleiner als die radiale Dicke des zweiten Ringteils (13b) ist.

6. Rohrkupplung nach einem der Ansprüche 3 bis 5, dadurch gekennzeichnet, daß die Rauhigkeit durch Schmirgel bewirkt ist.

7. Rohrkupplung nach Anspruch 4 oder 5, dadurch gekennzeichnet, daß die Vorsprünge neben radial durchgehenden Einschnitten in den Reibbelägen aus Metall von außen nach innen schuppenartig herausgedrückt sind.

8. Rohrkupplung nach Anspruch 1, dadurch gekennzeichnet, daß der erste Ringteil (13a) im wesentlichen aus Kunststoff und der zweite Ringteil (13b) aus Metall besteht und daß die Vorsprünge sich über den inneren Umfang des zweiten Ringteils (13b) erstreckende, sich radial nach innen verjüngende Rippen (20) sind.

9. Rohrkupplung nach Anspruch 8, dadurch gekennzeichnet, daß der erste Ringteil (13a) in einer Nut (21) im radial äußeren Umfang des zweiten Ringteils (13b) befestigt ist und die Tiefe der Nut (21) kleiner als die radiale Dicke des ersten Ringteils (13a) ist.

10. Ringnut nach einem der Ansprüche 2, 8 und 9, dadurch gekennzeichnet, daß der Kunststoff aus einem durch Glasfasern verstärkten Polyamid besteht.

11. Rohrkupplung nach Anspruch 10, dadurch gekennzeichnet, daß das Polyamid PA 66 ist.

12. Rohrkupplung nach Anspruch 8, dadurch gekennzeichnet, daß das Metall im wesentlichen aus Messing besteht.

13. Rohrkupplung nach Anspruch 12, dadurch gekennzeichnet, daß das Material zusätzlich Mangan aufweist.
